# EUROPEAN PATENT APPLICATION

(11) **EP 4 328 251 A1**
(43) Date of publication of application: **28.02.2024**
(21) Application number: 22861648.8
(22) Date of filing: 19.08.2022
(51) Int. Cl.: C08G 18/32, C08G 18/76, C08L 75/04

(54) **ELASTIC AND ANTIBACTERIAL POLYURETHANE, PREPARATION METHOD THEREFOR, AND PRODUCT COMPRISING SAME**

(30) Priority: 23.08.2021 KR 20210110765; 17.08.2022 KR 20220102689
(71) Applicant: LG Chem, Ltd., Seoul 07336 (KR)
(72) Inventor: HUR, Yoon Hyung, Daejeon 34122 (KR); KANG, Soonhee, Daejeon 34122 (KR); BAEK, Leehyeon, Daejeon 34122 (KR); CHOI, Hyungsam, Daejeon 34122 (KR); JUNG, Seonjung, Daejeon 34122 (KR); LEE, Ji Seok, Daejeon 34122 (KR); LEE, Jeong Yun, Daejeon 34122 (KR)
(74) Representative: Goddar, Heinz J.
(86) International application number: PCT/KR2022/012465
(87) International publication number: WO 2023/027438

(57) **Abstract**

The present application relates to an elastic antibacterial polyurethane polymer and a method for preparing the same. The polyurethane polymer has excellent antibacterial properties, mechanical properties, and heat resistance and durability.

## Description

### [TECHNICAL FIELD]

### CROSS-REFERENCE TO RELATED APPLICATION(S)

This application claims the benefit of Korean Patent Application No. 10-2021-0110765 filed on August 23, 2021 and Korean Patent Application No. 10-2022-0102689 filed on August 17, 2022 in the Korean Intellectual Property Office, the entire contents of which are incorporated herein by reference.

### TECHNICAL FIELD

The present application relates to an elastic antibacterial polyurethane and a method for preparing the same. Also, the present application relates to an article comprising the elastic antibacterial polyurethane.

### [BACKGROUND ART]

Polyurethane (PU), which is one of the engineering plastics, is used in various fields such as synthetic fibers, paints, and automotive interior materials. For example, polyurethane can be used together with nylon to form a synthetic fiber called spandex, which can be used in underwear, socks, swimwear, and the like. In addition, since polyurethane has a three-dimensional foam structure, it has elastic and durable, and thus is widely used in foam sponges and the like in addition to mattresses and fabrics.

On the other hand, when PU-related products are used for a long period of time, there is a problem that bacteria can propagate, and thus, it is necessary to secure antibacterial properties.

### [DETAILED DESCRIPTION OF THE INVENTION]

### [Technical Problem]

It is an obj ect of the present application to provide a polyurethane having excellent elasticity and antibacterial properties.

It is an object of the present application to provide a polyurethane having excellent heat resistance.

It is yet another object of the present application to provide an article comprising the polyurethan having the above-mentioned properties.

All of the above and other obj ects of the present application can be solved by the present application which is described in detail below.

### [Technical Solution]

In embodiments relating to the present application, the present application relates to an elastic antibacterial polyurethane polymer and a method for preparing the same. The polyurethane polymer of the present application has excellent antibacterial properties, heat resistance (durability), tensile properties, and the like.

Unless otherwise specifically defined herein, the term "alkyl group" may be an alkyl group having 1 to 40 carbon atoms. For example, the alkyl group may be an alkyl group having 1 to 36 carbon atoms, 1 to 32 carbon atoms, 1 to 28 carbon atoms, 1 to 24 carbon atoms, 1 to 20 carbon atoms, 1 to 16 carbon atoms, 1 to 12 carbon atoms, 1 to 8 carbon atoms, or 1 to 4 carbon atoms. In this case, the alkyl group may be a linear, branched or cyclic alkyl group. Further, the alkyl group can be optionally substituted with one or more substituents.

Unless otherwise specifically defined herein, the term "haloalkyl group" may refer to a compound in which a hydrogen atom of an alkyl group is substituted with a halogen atom. In this case, the alkyl group may be used in the same sense as those described above.

Unless otherwise specifically defined herein, the term "alkenyl group" may be an alkenyl group having 2 to 40 carbon atoms. For example, the alkenyl group may be an alkenyl group having 2 to 36 carbon atoms, 2 to 32 carbon atoms, 2 to 28 carbon atoms, 2 to 24 carbon atoms, 2 to 20 carbon atoms, 2 to 16 carbon atoms, 2 to 12 carbon atoms, 2 to 8 carbon atoms, or 2 to 4 carbon atoms. In this case, the alkenyl group may be a linear, branched or cyclic alkenyl group. Further, the alkenyl group may be optionally substituted by one or more substituents.

Unless otherwise specifically defined herein, the term "alkynyl group" may be an alkynyl group having 2 to 40 carbon atoms. For example, the alkynyl group may be an alkynyl group having 2 to 36 carbon atoms, 2 to 32 carbon atoms, 2 to 28 carbon atoms, 2 to 24 carbon atoms, 2 to 20 carbon atoms, 2 to 16 carbon atoms, 2 to 12 carbon atoms, 2 to 8 carbon atoms, or 2 to 4 carbon atoms. In this case, the alkynyl group may be a linear, branched or cyclic alkynyl group. Further, the alkynyl group may be optionally substituted by one or more substituents.

Unless otherwise specifically defined herein, the term "aryl group" refers to a monovalent residue derived from a compound or a derivative thereof which comprises one benzene ring structure, or a structure in which two or more benzene rings are connected while sharing one or two carbon atoms, or connected by an arbitrary linker. For example, the aryl group may be an aryl group having 6 to 30 carbon atoms, 6 to 25 carbon atoms, 6 to 21 carbon atoms, 6 to 18 carbon atoms, and 6 to 13 carbon atoms. In this case, the aryl group may be optionally substituted by one or more substituents.

Unless otherwise specifically defined herein, the term "heteroaryl group" may refer to an aryl group containing at least one of O, N, Si and S. For example, an aryl group in the heteroaryl group may be used in the same sense as those described above. Alternatively, the heteroaryl group may have 2 to 30 carbon atoms.

Unless otherwise specifically defined herein, the term "aryloxy group" may refer to a group RO- wherein R is an aryl group. In this case, the allyl group may be used in the same sense as those described above.

Unless otherwise specifically defined herein, the term "alkoxy group" may be an alkoxy group having 1 to 40 carbon atoms. For example, the alkoxy group may be an alkoxy group having 1 to 36 carbon atoms, 1 to 32 carbon atoms, 1 to 28 carbon atoms, 1 to 24 carbon atoms, 1 to 20 carbon atoms, 1 to 16 carbon atoms, 1 to 12 carbon atoms, 1 to 8 carbon atoms, or 1 to 4 carbon atoms. The alkoxy group may be a linear, branched or cyclic alkoxy group. Further, the alkoxy group may be optionally substituted by one or more substituents.

Unless otherwise specifically defined herein, the term "alicyclic structure" is a cyclic hydrocarbon structure that is not an aromatic ring structure, and may mean a compound represented by -Y. Unless otherwise specified, the alicyclic ring structure may be, for example, a alicyclic ring structure having 3 to 30 carbon atoms, 3 to 25 carbon atoms, 3 to 21 carbon atoms, 3 to 18 carbon atoms, or 3 to 13 carbon atoms. The alicyclic structure may be optionally substituted with one or more substituents.

Unless otherwise specifically defined herein, the term "heteroalicyclic structure" may refer to an alicyclic structure containing at least one of O, N, Si, and S. For example, the alicyclic structure may be used in the same sense as those described above.

Unless otherwise specifically defined herein, the term "alkylthio group" may refer to RS-where R is an alkyl group. In this case, the alkyl group may be used in the same sense as those described above.

Unless otherwise specifically defined herein, the term "arylthio group" may refer to S-where R is an aryl group. In this case, the aryl group may be used in the same sense as those described above.

Unless otherwise specifically defined herein, the term "direct bond" refers to a case in which an atom does not exist at a position that may be a direct bond.

Unless otherwise specifically defined herein, the term "alkylene group" may be an alkylene group having 1 to 40 carbon atoms. For example, the alkylene group may be an alkylene group having 1 to 36 carbon atoms, 1 to 32 carbon atoms, 1 to 28 carbon atoms, 1 to 24 carbon atoms, 1 to 20 carbon atoms, 1 to 16 carbon atoms, 1 to 12 carbon atoms, 1 to 8 carbon atoms, or 1 to 4 carbon atoms. The alkylene group may be a linear, branched or cyclic alkylene group. Further, the alkylene group may be optionally substituted with one or more substituents.

Unless otherwise specifically defined herein, the term "heteroalkylene group" may be an alkylene group containing at least one of O, N, Si and S. In this case, the alkylene group may be used in the same sense as those described above.

Unless otherwise specifically defined herein, the term "cycloalkylene group" is a divalent functional group derived from cycloalkane, and may have 3 to 20 carbon atoms. For example, the cycloalkylene group may be a cycloalkylene group having 3 to 15 carbon atoms, 3 to 10 carbon atoms, or 3 to 5 carbon atoms. Further, the cycloalkylene group may be optionally substituted with one or more substituents.

Unless otherwise specifically defined herein, the term "arylene group" may refer to a divalent aromatic hydrocarbon group. For example, the arylene group refers to a monovalent residue derived from a compound or a derivative thereof which comprises one benzene ring structure, or a structure in which two or more benzene rings are connected while sharing one or two carbon atoms, or connected by an arbitrary linker. For example, the arylene group may be an arylene group having 6 to 30 carbon atoms, 6 to 25 carbon atoms, 6 to 21 carbon atoms, 6 to 18 carbon atoms, and 6 to 13 carbon atoms. In this case, the arylene group may be optionally substituted by one or more substituents.

Unless otherwise specifically defined herein, the term "heteroarylene group" may be an arylene group containing at least one of O, N, Si and S. For example, the arylene group in the heteroarylene group may be used in the same sense as those described above. Alternatively, the hetero arylene group may have 2 to 30 carbon atoms.

The above-mentioned group may be substituted or unsubstituted, without being particularly limited. As used herein, the term "substituted or unsubstituted" means being unsubstituted or substituted with one or more substituents selected from the group consisting of deuterium; a halogen group; a cyano group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; and a heterocyclic group containing at least one of N, O and S atoms, or being unsubstituted or substituted with a substituent to which two or more substituents of the above-exemplified substituents are connected. For example, " a substituent in which two or more substituents are connected " may be a biphenyl group. Namely, a biphenyl group may be an aryl group, or it may be interpreted as a substituent in which two phenyl groups are connected.

Unless otherwise specifically defined herein, the number of carbon atoms in the aforementioned group may mean the number of carbon atoms in relation to the length of the main chain or the number of carbon atoms in the main backbone.

"The elastic antibacterial polyurethane polymer includes a predetermined unit" used herein means that one or more compounds are polymerized into a polymer structure (main chain or side chain) formed by reacting said compounds, and units derived therefrom are included in the polymer structure.

Unless otherwise specifically defined herein, the term "molecular weight" may be a weight average molecular weight (e.g., g/mol) in terms of polystyrene measured by the GPC method.

Now, the present invention will be described in more detail.

In an embodiment relating to the present application, the present application relates to an elastic antibacterial polyurethane. The polyurethane described below has excellent antibacterial properties, mechanical properties (e.g., tensile strength, tensile strain), heat resistance, and the like.

Specifically, the elastic antibacterial polyurethane of the present application includes a unit(s) derived from (A) an isocyanate compound; and (B) a polyol comprising a polyether glycol and a diol represented by the following Chemical Formula 1, wherein the (B) polyol comprises 0.01 to 40 mol% of the diol represented by Chemical Formula 1: 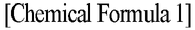 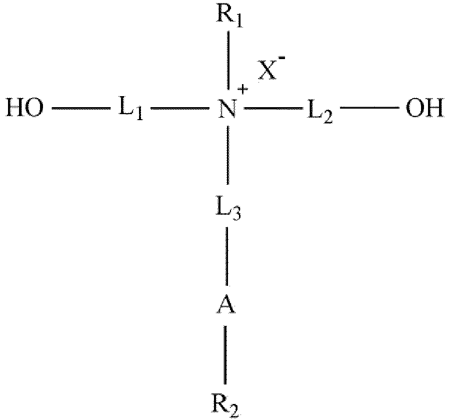 wherein, in Chemical Formula 1,
R₁ and R₂ are each independently hydrogen, an alkyl group, a haloalkyl group, an alkenyl group, an alkynyl group, an aryl group, a heteroaryl group, an aryloxy group, an alkoxy group, an alicyclic structure, a heteroalicyclic structure or an alkylthio group or an arylthio group,
L₁ and L₂ are each independently an alkylene group, a heteroalkylene group, a cycloalkylene group, an arylene group, or a heteroarylene group,
L₃ is a direct bond, an alkylene group, a heteroalkylene group, a cycloalkylene group, an arylene group, or a heteroarylene group,
the A is an alkylene group having more than 6 carbon atoms, and
X⁻ means an anion.

Wherein, the number of carbon atoms of A in Chemical Formula 1 may mean the number of carbon atoms in the main chain.

As described above, the elastic antibacterial polyurethane of the present application can be prepared by reacting an isocyanate compound with at least two types of mutually different polyols, namely, polyol components comprising a polyether glycol and the compound of Formula 1 (quaternary ammonium diol).

The type of the (A) isocyanate compound is not particularly limited, and for example, the isocyanate compound can be selected in consideration of the physical properties of the polymer (e.g., processability, heat resistance, etc.), the reactivity between the polymer forming components, and the like.

In a specific embodiment of the present application, the isocyanate compound used to form the polyurethane may be an aromatic isocyanate. For example, the aromatic isocyanate may compensate for the low heat resistance of the ammonium diol represented by Chemical Formula 1.

In one illustrative embodiment, as an isocyanate compound contained in the polyurethane, toluene diisocyanate, xylylene diisocyanate, methylene diphenyl diisocyancate (MDI), or an aromatic isocyanate compound and the like having a skeleton of the compounds listed above can be used. However, the aromatic isocyanate used in the preparation of the polymer of the present application are not limited to those listed above.

The (B) polyol may refer to an alcohol compound comprising two or more hydroxyl groups. In the present application, the polyol includes (b1) a polyether glycol and (b2) a diol represented by the Chemical Formula 1.

The polyether glycol (b1) is a main component that may ensure the elastic properties of the polyurethane of the present application.

The type of polyether glycol used is not particularly limited as long as it does not contradict the achievement of the technical problem to be solved by the present application. For example, poly(tetramethylene ether)glycol (PTMG) or polypropylene glycol (PPG) can be used.

In one illustrative embodiment, the polyether glycol may have a weight average molecular weight in the range of 500 to 3000. Specifically, the lower limit of the molecular weight may be 600 or more, 700 or more, 800 or more, 900 or more, 1000 or more, 1100 or more, 1200 or more, 1300 or more, 1400 or more, 1500 or more, 1600 or more, 1700 or more, 1800 or more, 1900 or more, 2000 or more, 2100 or more, 2200 or more, 2300 or more, 2400 or more, or 2500 or more, and the upper limit thereof may be, for example, 2900 or less, 2800 or less, 2700 or less, 2600 or less, 2500 or less, 2400 or less, 2300 or less, 2200 or less, 2100 or less, 2000 or less, 1900 or less, 1800 or less, 1700 or less, 1600 or less, or 1500 or less. In a specific embodiment of the present application, the polyether glycol may have a weight average molecular weight of 1000 or more or 1500 or more, and 2500 or less or 2000 or less. When the molecular weight of polyether glycol is appropriately adjusted within the above-mentioned range, it is advantageous for ensuring mechanical properties (e.g., elastic or tensile properties).

The diol component (b2) represented by Chemical Formula 1 can impart antibacterial properties to the polyurethane.

In one illustrative embodiment, R₁ of Chemical Formula 1 may be an alkyl group, a haloalkyl group, an alkenyl group, an alkynyl group, an aryl group, a heteroaryl group, an aryloxy group, an alkoxy group, an alicyclic structure, a heteroalicyclic structure, or an alkylthio group or an arylthio group, except for hydrogen. A polyurethane comprising units derived from a quaternary ammonium monomer in the form of a diol (or diol-based quaternary ammonium monomer) is more advantageous for providing excellent antibacterial properties.

In one illustrative embodiment, the A may be an alkylene group having more than 6 and not more than 20 carbon atoms, more specifically, 8 to 20 or less, 8 to 18, 8 to 16, 8 to 14, 8 to 12, or 8 to 10 carbon atoms. When A of Chemical Formula 1 is an alkylene group satisfying the above carbon number, it is advantageous for imparting excellent antibacterial properties and low toxicity to the compound of Chemical Formula 1 or the polyurethane polymer.

In one illustrative embodiment, the A may be a linear alkylene group. In the monomer represented by Chemical Formula 1, the ammonium cation is adsorbed on the anion membrane of bacteria, wherein the linear alkylene group, namely, A of Chemical Formula 1, which is a hydrophobic group, functions advantageously to exert an antibacterial effect while destroying the cell membrane structure of bacteria to flow out proteins and enzymes.

The antibacterial action due to the destruction of the cell membrane structure can be more effective when A has a structure that is advantageous for the cell membrane penetration of bacteria while ensuring a certain degree of hydrophobicity. In consideration of this point, in the embodiment of the present application, the A may have a structure represented by the following Chemical Formula 2. 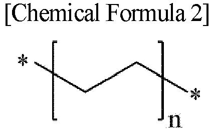 wherein, in Chemical Formula 2,
n is a number of 4 or more (e.g., n is 4 or more, 5 or more, or 6 or more), L₃ and R₂ may be respectively bonded to both ends indicated by the * , provided that when L₃ is a direct bond, one end indicated by the * is bonded to an N atom.

When n in Chemical Formula 2 becomes too large, the toxicity of the compound of Chemical Formula 1 or the polymer may increase. In consideration of this point, the upper limit of n may be, for example, 10 or less, 9 or less, 8 or less, 7 or less, 6 or less, or 5 or less.

In one illustrative embodiment, R₁ and/or R₂ of Chemical Formula 1 may be a linear alkyl group.

The mechanism of the antibacterial action by the monomer of Chemical Formula 1 is initiated by the adsorption of ammonium cations to a bacterial anion membrane. When R₁ and/or R₂ have a large number of carbon atoms (e.g., long chain, etc.), adsorption may not be performed smoothly due to a kind of steric hindrance, and the antibacterial properties of the polymer may not be sufficiently expressed. Considering this point, in an embodiment of the present application, R₁ and/or R₂ of Chemical Formula 1 may be an alkyl group having 12 or less, 8 or less, or 4 or less carbon atoms. Specifically, the R₁ and/or R₂ may be a propyl group, an ethyl group, or a methyl group.

In one illustrative embodiment, R₁ and R₂ of Chemical Formula 1 may be the same as each other.

In one illustrative embodiment, the L₁ and/or L₂ may be a linear alkylene group.

As described above, the mechanism of the antibacterial action by the monomer of Chemical Formula 1 is initiated by the adsorption of ammonium cations to a bacterial anion membrane. When L₁ and/or L₂ have a large number of carbon atoms, adsorption may not be performed smoothly due to a kind of steric hindrance, and the antibacterial properties of the polymer may not be sufficiently expressed. Considering this point, in an embodiment of the present application, L₁ and/or L₂ of Chemical Formula 1 may be an alkylene group having 12 or less, 8 or less, or 4 or less carbon atoms. For example, the L₁ and/or L₂ may be a propylene group, an ethylene group, or a methylene group.

Considering the securing of antibacterial properties and the yield related to monomer production, in an embodiment of the present application, the L₁ and L₂ may be the same as each other.

In one illustrative embodiment, the L₃ may be a linear alkylene group.

As described above, in consideration of the degree of antibacterial property expression by the monomer of Chemical Formula 1, the carbon number of the L₃ may be determined. In a specific embodiment of the present application, the L₃ may be an alkylene group having 12 or less carbon atoms, 8 or less carbon atoms, or 4 carbon atoms or less. For example, the L₃ may be a propylene group, an ethylene group, or a methylene group.

In relation to Chemical formula 1, the X⁻is not particularly limited. For example, the X⁻ may be F⁻, Cl⁻, Br⁻, I⁻, NO₃⁻, (CN)₂N⁻, BF₄⁻, ClO₄⁻, RSO₃⁻ (wherein, R is an alkyl group having 1-9 carbon atoms or a phenyl group), RCOO⁻ (wherein, R is an alkyl group or phenyl group having 1-9 carbon atoms), PF₆, (CF₃)₂PF₄⁻, (CF₃)₃PF₃⁻, (CF₃)₄PF₂⁻, (CF₃)₅PF⁻, (CF₃)₆P⁻, (CF₃SO₃⁻)₂, (CF₂CF₂SO₃⁻)₂, (C₂F₅SO₂)₂N⁻, (CF₃SO₃)₂N⁻, (CF₃SO₂)(CF₃CO)N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃COO⁻, C₃F₇COO⁻, CF₃SO₃⁻, or C₄F₉SO₃⁻.

The molecular weight of the monomer represented by Chemical Formula 1 may be adjusted in consideration of antibacterial properties. For example, when the molecular weight is large because the carbon number of the other group bonded to the N atom constituting the ammonium of Chemical Formula 1 has too large, it is possible to develop harmful toxicity to the human body. In addition, when the molecular weight is small because the carbon number of other groups bonded to the N atom constituting ammonium is too small, it is difficult to secure sufficient antibacterial activity.

In consideration of the above-mentioned points, in a specific embodiment of the present application, the compound represented by Chemical Formula 1, that is, the diol based ammonium monomer may have a weight average molecular weight of 300 or more. Specifically, the lower limit of the weight average molecular weight of the diol based ammonium monomer may be 310 or more, 320 or more, 330 or more, 340 or more, 350 or more, 360 or more, 370 or more, 380 or more, 390 or more, or 400 or more. And, the upper limit thereof may be 500 or less. Specifically, the upper limit of the weight average molecular weight of the diol based ammonium monomer may be, for example, 490 or less, 480 or less, 470 or less, 460 or less, 450 or less, 440 or less, 430 or less, 420 or less, 410 or less, 400 or less, 390 or less, 380 or less, 370 or less, 360 or less, or 350 or less.

In an embodiment of the present application, the (B) polyol comprises 0.01 to 40 mol% of the diol represented by Chemical Formula 1.

Specifically, the content of the diol represented by Chemical Formula 1 in the (B) polyol may be, for example, 0.05 mol% or more, 0.1 mol% or more, or 0.5 mol% or more, more specifically, 1 mol% or more, 2 mol% or more, 3 mol% or more, 4 mol% or more, 5 mol% or more, 6 mol% or more, 7 mol% or more, 8 mol% or more, 9 mol% or more, 10 mol% or more, 11 mol% or more, 12 mol% or more, 13 mol% or more, 14 mol% or more, 15 mol% or more, 16 mol% or more, 17 mol% or more, 18 mol% or more, 19 mol% or more, 20 mol% or more, 21 mol% or more, 22 mol% or more, 23 mol% or more, 24 mol% or more, 25 mol% or more, 26 mol% or more, 27 mol% or more, 28 mol% or more, 29 mol% or more, 30 mol% or more, 31 mol% or more, 32 mol% or more, 33 mol% or more, 34 mol% or more or 35 mol% or more. And, the upper limit thereof may be, for example, 39 mol% or less, 38 mol% or less, 37 mol% or less, 36 mol% or less, 35 mol% or less, 34 mol% or less, 33 mol% or less, 32 mol% or less, 31 mol% or less, 30 mol% or less, 29 mol% or less, 28 mol% or less, 27 mol% or less, 26 mol% or less, 25 mol% or less, 24 mol% or less, 23 mol% or less, 22 mol% or less, 21 mol% or less, 20 mol% or less, 19 mol% or less, 18 mol% or less, 17 mol% or less, 16 mol% or less, 15 mol% or less, 14 mol% or less, 13 mol% or less, 12 mol% or less, 11 mol% or less, 10 mol% or less, 9 mol% or less, 8 mol% or less, 7 mol% or less, 6 mol% or less, or 5 mol% or less.

When the diol represented by Chemical Formula 1 satisfies the above-mentioned content range, it is advantageous for ensuring excellent heat resistance, elasticity, and antibacterial properties, which are the technical problems to be solved by the present application.

The content of polyether glycol in the (B) polyol may be, for example, the residual amount excluding the content (mol%) of the diol represented by Chemical Formula 1 in the polyol.

For example, the content of polyether glycol in the (B) polyol may be 60 mol% or more, 65 mol% or more, 70 mol% or more, 75 mol% or more, 80 mol% or more, 85 mol% or more, 90 mol% or more or 95 mol% or more. And, the upper limit thereof may be, for example, 99.99 mol% or less, 99.95 mol% or less, 99.9 mol% or less or 99.5 mol% or less, specifically, 99 mol% or less, 95 mol% or less, 90 mol% or less, 85 mol% or less, 80 mol% or less, 75 mol% or less, 70 mol% or less or 65 mol% or less.

When the polyether glycol satisfies the above-mentioned content range, it is advantageous for ensuring excellent heat resistance, elasticity, and antibacterial properties, which are the technical problems to be solved by the present application.

In one illustrative embodiment, the molar ratio of (A) isocyanate to (B) polyol may be in the range of 1.0 to 2.0. Wherein, the molar ratio means the ratio of the number of moles of the isocyanate compound used in the preparation of the polymer divided by the total number of moles of the polyol.

For example, the lower limit of the molar ratio of (A) isocyanate to (B) polyol may be 1.1 or more, 1.2 or more, 1.3 or more, 1.4 or more, 1.5 or more, 1.6 or more, 1.7 or more, 1.8 or more, or 1.9 or more. And, the upper limit thereof may be, for example, 1.9 or less, 1.8 or less, 1.7 or less, 1.6 or less, 1.5 or less, 1.4 or less, 1.3 or less, or 1.2 or less.

In an embodiment of the present application, the polyurethane polymer may include the units derived from methylenediphenyl diisocyanate (MDI) which is an isocyanate compound; polytetramethylene glycol (PTMG), which is a polyether glycol; and the compound of Chemical Formula 1. In this case, the polyurethane polymer may include a structure represented by the following Formula.

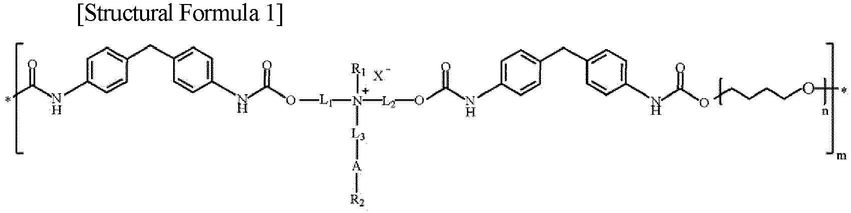

In the structural formula, n may be an integer that may satisfy the molecular weight of the polyether glycol described above.

Further, in the above structural formula, m may be an integer that may satisfy the molecular weight of the urethane polymer described later, for example, may be 3 to 100.

In another illustrative embodiment, the polyurethane polymer may further include a unit comprising methylenediphenyldiisocyanate (MDI), which is an isocyanate compound, and polytetramethylene glycol (PTMG), which is a polyether glycol, in addition to the units of Structural Formula 1 (that is, a unit that does not contain a unit derived from the compound of Chemical Formula 1). Such a unit does not include an unit derived from Chemical Formula 1 in Structural Formula 1, and in such an unit, the integer m may be 3 to 100 or greater than 100.

In one illustrative embodiment, the elastic antibacterial polyurethane polymer may further include a diamine compound-derived unit or a unit derived from diamine compound. Specifically, the elastic antibacterial polyurethane polymer may include a unit(s) derived from (A) an isocyanate compound; (B) a polyol comprising a polyether glycol and a diol represented by the Chemical Formula 1; and (C) a diamine compound. More specifically, the elastic antibacterial polyurethane polymer can be prepared by further reacting a diamine compound with a polymerized product (e.g., a prepolymer) of (A) an isocyanate compound; and (B) a polyol comprising a polyether glycol and a diol represented by the Chemical Formula 1.

The diamine compound can function as a so-called chain extender. The type of diamine that can be used is not particularly limited. For example, a compound such as ethylenediamine, 1,2'-propylenediamine, hexamethylene diamine, xylenediamine, 4,4'-diphenylmethane diamine or hydrazine can be used in the present application. Alternatively, one or more of the above-listed compounds can be used.

In one illustrative embodiment, the molar ratio of the (C) diamine compound to the (B) polyol may be less than 1.0. For example, the molar ratio of the (C) diamine compound to the (B) polyol may be 0.9 or less, 0.8 or less, 0.7 or less, 0.6 or less, 0.5 or less, or 0.4 or less. And, the lower limit thereof may be, for example, 0.1 mol or more, 0.2 mol or more, 0.3 mol or more, or 0.4 mol or more. Within the above range, the function of the above-mentioned ethylene diamine can be properly ensured.

In a specific embodiment of the present application, the polyurethane may have a molecular weight of 10,000 or more, without being particularly limited. Specifically, the molecular weight of the polyurethane may be 50,000 or more or 100,000 or more. And, the upper limit thereof may be, for example, 300,000 or less, 250,000 or less, 200,000 or less, 150,000 or less, or 100,000 or less. When the above-mentioned range is satisfied, it is advantageous for ensuring mechanical properties (e.g., tensile properties), and in particular, it may be advantageous for exhibiting elasticity in textile applications.

The elastic antibacterial polyurethane polymer can exhibit certain properties.

In one illustrative embodiment, the polyurethane polymer of the present application may exhibit an antibacterial rate (bacteriostatic reduction rate) of 90% or more as measured according to JIS Z 2801. For example, the antibacterial rate may be 91% or more, 92% or more, 93% or more, 94% or more, 95% or more, 96% or more, 97% or more, 98% or more, 99% or more, or 99.9% or more. In a specific embodiment of the present application, the polyurethane polymer may exhibit an antibacterial rate of substantially 100%. If the antibacterial rate is less than the above value, it is difficult to see that the polyurethane polymer has excellent antibacterial properties.

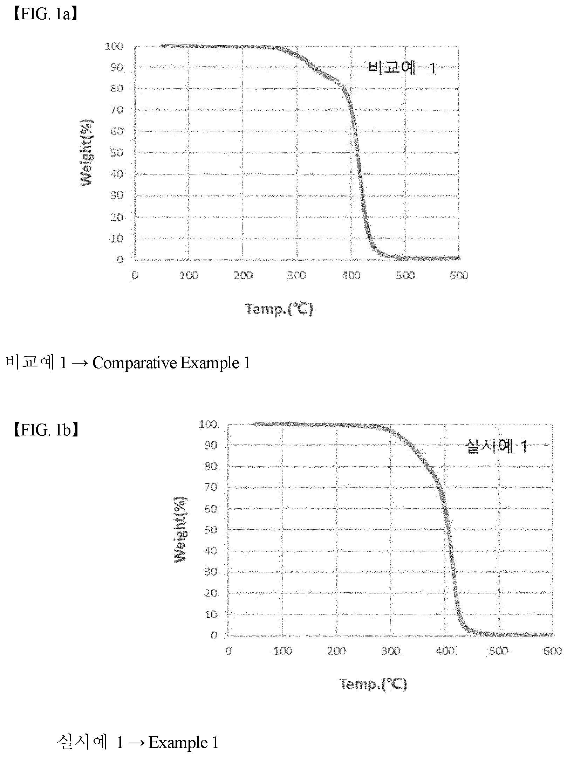

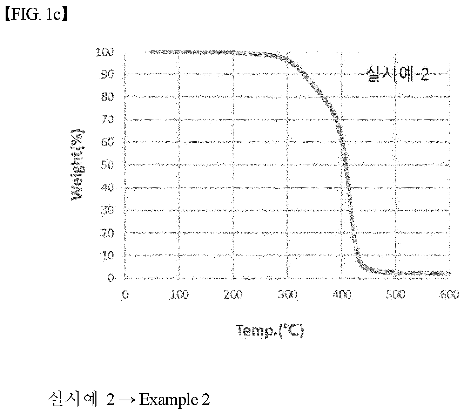

In one illustrative embodiment, the polyurethane polymer of the present application may have a thermal decomposition temperature (Td) of 280°C or more. Wherein, the thermal decomposition temperature can mean the temperature Td (thermal decomposition initiation temperature) at the time point at which the weight loss of the polymer reaches 10%, when evaluating the weight loss of a polymer while raising the temperature to 700°C at a rate of 10°C/min under N₂, similarly to the experiment related to Fig. 1. The thermal decomposition temperature may be, for example, 285°C or more, 290°C or more, 295°C or more, 300°C or more, 305°C or more, or 310 °C or more. And, the upper limit thereof may be, for example, 350°C or less, 345°C or less, 340°C or less, 335°C or less, 330°C or less, 325°C or less, 320°C or less, 315°C or less, 310°C or less, 305°C or less, or 300°C or less. Within the above range, the polymer may have excellent processability and heat resistance durability.

In one illustrative embodiment, the polyurethane polymer of the present application may have a tensile strain of 900% or more as measured according to the ASTM D882 tensile test method. Wherein, the tensile strain can be, for example, measured for the antibacterial polyurethane polymer sample with elasticity having a ratio of width to length (width:length) of 1:1 to 100, 1:1 to 50, 1:1 to 30, or 1:1 to 10. Specifically, the tensile strain may be, for example, 910% or more, 920% or more, 930% or more, 940% or more, 950% or more, 960% or more, 970% or more, 980% or more, 990% or more, 1000% or more, or 1010% or more. And, the upper limit therefore may be, for example, 1100% or less, 1090% or less, 1080% or less, 1070% or less, 1060% or less, 1050% or less, 1040% or less, 1030% or less, 1020% or less, 1010% or less, or 1000% or less. As confirmed in the experiments described below, the polymer of the present application can maintain high tensile strain while introducing the diol of Chemical Formula 1 in order to ensure antibacterial properties.

In one illustrative embodiment, the polyurethane polymer of the present application may have a tensile strength of 30 Mpa or more as measured according to the ASTM D882 tensile test method. Wherein, the tensile strength may be, for example, measured for the antibacterial polyurethane polymer sample with elasticity having a ratio of width to length (width:length) of 1:1 to 100, 1:1 to 50, 1:1 to 30, or 1:1 to 10. Specifically, the tensile strength may be, for example, 35 Mpa or more, 40 Mpa or more, 45 Mpa or more, 50 Mpa or more, 55 Mpa or more, or 60 Mpa or more. And, the upper limit thereof may be, for example, 65 Mpa or less, 60 Mpa or less, 55 Mpa or less, 50 Mpa or less, 45 Mpa or less, 40 Mpa or less or 35 Mpa or less. As confirmed in the experiments described below, the polymer of the present application can maintain high tensile strength while introducing the diol of Chemical Formula 1 in order to ensure antibacterial properties.

In one illustrative embodiment, the polyurethane polymer of the present application may satisfy the content of unreacted diol represented by Chemical Formula 1 of 1,000 ppm or less with respect to the entire polymer. The unreacted content can be confirmed using high performance liquid chromatography (HPLC). Specifically, the content of unreacted diol represented by Chemical Formula 1 with respect to the entire polymer may be 950 ppm or less, 900 ppm or less, 850 ppm or less, 800 ppm or less, 750 ppm or less, 700 ppm or less, 650 ppm or less, 600 ppm or less, 550 ppm or less, 500 ppm or less, 450 ppm or less, 400 ppm or less, 350 ppm or less, 300 ppm or less, 250 ppm or less, 200 ppm or less, 150 ppm or less, 100 ppm or less or 50 ppm or less. When the content of unreacted monomer increases or exceeds the above range, the mechanical properties (tensile properties) may be reduced due to the monomer of Chemical Formula 1 that is not chemically bonded.

The use of the polyurethane polymer is not particularly limited. For example, the polymer can be used as a raw material for fibers (e.g., elastic yarns such as spandex), fabrics, garments (e.g., underwear, swimwear, socks, etc.), paints, automobile interior materials, automobile interior materials, mattresses or foams.

In another embodiment relating to the present application, the present application relates to a method for preparing an elastic antibacterial polyurethane polymer. In accordance with this method, the elastic antibacterial polyurethane polymer of the above-mentioned configuration (or structure) is prepared.

Specifically, the preparation method includes a step (S1) of mixing and reacting (A) an isocyanate compound; and (B) a polyol comprising a polyether glycol and a diol represented by the following Chemical Formula 1. Wherein, the (B) polyol comprises 0.01 to 40 mol% of the diol represented by Chemical Formula 1: 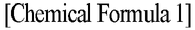 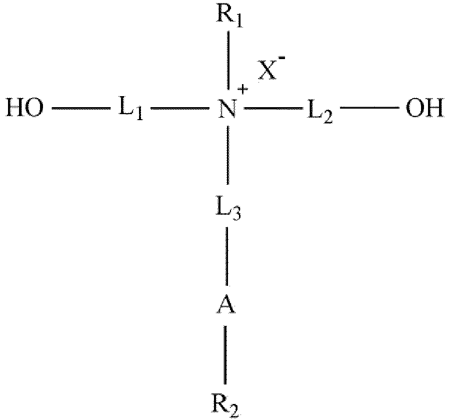 wherein, in Chemical Formula 1,
R₁ and R₂ are each independently hydrogen, an alkyl group, a haloalkyl group, an alkenyl group, an alkynyl group, an aryl group, a heteroaryl group, an aryloxy group, an alkoxy group, an alicyclic structure, a heteroalicyclic structure or an alkylthio group or an arylthio group,
L₁ and L₂ are each independently an alkylene group, a heteroalkylene group, a cycloalkylene group, an arylene group, or a heteroarylene group,
L₃ is a direct bond, an alkylene group, a heteroalkylene group, a cycloalkylene group, an arylene group, or a heteroarylene group,
the A is an alkylene group having more than 6 carbon atoms, and
X⁻ means an anion.

Wherein, the number of carbon atoms in Chemical Formula 1 A may mean the number of carbon atoms in the main chain.

The details of a component that forms the polyurethane of the present application, that is, the polymer component used in the polyurethane production, the content thereof, the characteristics of the prepared polyurethane polymer, and the like are the same as those described above, and thus further description thereof will be omitted.

In one illustrative embodiment, the reaction may proceed at a temperature of 100°C or less. When the reaction temperature is higher than 100°C, diisocyanate can produce a dimer through a side reaction, which hinders polymer synthesis. Specifically, the reaction temperature may be 95°C or less, 90°C or less, 85 °C or less, 80 °C or less, 75°C or less, 70°C or less, 65°C or less or 60°C or less. The lower limit thereofmay be, for example, 50 °C or more, 55 °C or more, 60°C or more, 65 °C or more, or 70 °C or more.

In one illustrative embodiment, the reaction may be performed for several tens of minutes to several tens of hours. Specifically, the reaction may be performed, for example, for 30 minutes or more, 60 minutes or more, or 90 minutes or more. And the upper limit of the reaction time may be, for example, 30 hours or less, 25 hours or less, 20 hours or less, 15 hours or less, 10 hours or less, or 5 hours or less. Within the above time range, the molecular weight of the polymer may be appropriately adjusted, and the occurrence of side reactions may be adjusted.

In one illustrative embodiment, the method may further include a step S2 of further reacting the (C) diamine compound with the prepolymer obtained by reacting (A) an isocyanate compound and (B) a polyol comprising a polyether glycol and a diol represented by the Chemical Formula 1.

Specifically, the prepolymer or its solution is diluted in a solvent to prepare a diluent. The type of solvent for preparing the diluent is not particularly limited, but, for example, dimethylacetamide (DMAc) may be used. At this time, the concentration of the diluent may be adjusted so that the content of the prepolymer in the total weight of the diluent is about 10 to 40 or 20 to 30% by weight. Then, a diamine compound is added to the diluent of the prepolymer prepared as described above. According to an embodiment of the present application, the temperature at which the diamine compound is added to the prepolymer diluent can be adjusted to a level of 10°C or less, for example, about 0 to 4°C, so that the addition of the diamine compound does not cause an abrupt reaction. After addition of the diamine compound, the reaction can be performed for about several hours, for example 1 to 2 hours.

As described above, the elastic antibacterial polyurethane of the present application can be provided through the reaction of the diamine compound as a chain extender and the prepolymer.

The elastic antibacterial polyurethane prepared by the above-mentioned method satisfies the above-mentioned properties (e.g., antibacterial rate, tensile strain, tensile strength and unreacted diol content).

In another embodiment relating to the present application, the present application relates to an engineering plastic including the elastic antibacterial polyurethane polymer.

The engineering plastic is, for example, a plastic that is used as parts material s for industrial purpose or industrial machines, instruments, and the like, and its specific use is not particularly limited.

In another embodiment relating to the present application, the present application relates to an article comprising the elastic antibacterial polyurethane polymer.

In one illustrative embodiment, the article may be fibers (e.g., elastic yarns such as spandex, etc.), fabrics, garments (e.g., underwear, swimwear, socks, etc.), paints, automobile interior materials, automobile exterior materials, mattresses, or foams. According to an embodiment of the present application, the article may be a spandex fiber including the above-described elastic antibacterial polymer, a fabric or a garment including the fiber.

In another embodiment relating to the present application, the present application relates to a spinning composition (or spinning solution) for producing an elastic yarn. The spinning composition comprises at least the elastic polymer described above.

In another example related to the present application, the present application relates to a method for preparing the spinning composition (or spinning solution) for producing the elastic yarn. The method includes all of the above-described method and process for preparing the elastic antibacterial polyurethane polymer.

In another embodiment relating to the present application, the present application relates to an elastic yarn (e.g., spandex) including the elastic antibacterial polyurethane polymer.

Since the elastic yarn includes a polyurethane polymer having the properties as described above, the antibacterial properties can be provided without deterioration of tensile properties or heat resistance durability. These elastic yarns can be used in sanitary or medical textiles.

The shape of the elastic yarn is not particularly limited as it may be mono or multi-filament. Further, the fineness is also not particularly limited, and can be appropriately adjusted according to the use for which the fiber is used.

The details of the polyurethane polymer are the same as those described above, and thus further description thereof is omitted.

In another embodiment relating to the present application, the present application relates to a method of manufacturing the elastic yarn. Specifically, the method includes a step (S1) of preparing a spinning solution, and a step (S2) of spinning the spinning solution.

In a specific embodiment of the present application, the step (S1) includes a step (S11) of mixing and reacting an isocyanate compound, and (B) a polyol comprising a polyether glycol and a diol represented by Chemical Formula 1; and a step (S12) of further reacting the (C) diamine compound with a prepolymer obtained by reacting (A) an isocyanate compound; and (B) a polyol comprising polyether glycol and a diol represented by Chemical Formula 1. Wherein, the (B) polyol comprises 0.01 to 40 mol% of the diol represented by Chemical Formula 1.

In addition, in relation to the spinning solution manufacturing step, the production details of the elastic antibacterial polyurethane, which is the main component of the spinning solution (e.g., prepolymer preparation, reaction of the prepolymer and diamine, etc.) are the same as those described in the elastic antibacterial polyurethane and its manufacturing method, and thus, it will be omitted.

In relation to the step (S2), the spinning process for producing the fiber is not particularly limited. For example, a spinning device having a spinneret can be used, and the temperature at the time of spinning may be adjusted to, for example, a level of 200°C or more or 250°C or more.

After spinning, cooling with air or liquid (e.g., water or liquids containing other solvents) can be performed.

In one illustrative embodiment, the method may further include a winding step (S3). The fibers that have been spun or cooled after spinning may be wound through a known method or device, such as a winding roller.

### [Advantageous Effects]

According to specific embodiments of the present application, a polyurethane having excellent antibacterial properties, mechanical properties (e.g., tensile strength and tensile strain), heat resistance, and the like can be provided.

### [BRIEF DESCRIPTION OF THE DRAWINGS]

Fig. 1 is a graph showing experimental results related to heat resistance. Specifically, Fig. 1a relates to Comparative Example 1, Fig. 1b relates to Example 1, and Fig. 1c relates to Example 2.

### [DETAILED DESCRIPTION OF THE EMBODIMENTS]

Hereinafter, the action and effect of the invention will be described in more detail with reference to specific examples of the invention. However, these examples are presented for illustrative purposes only, and the scope of the invention is not limited thereto in any sense.

### Preparation of polymers

### Example 1

11.6g of MDI (Methylene diphenyl diisocyanate) (Mw molecular weight: 250.25), 52.3g of PTMG (poly(tetramethylene ether)glycol) (Mw molecular weight: 2000.0) and 1.1 g 1.1 g of a quaternary ammonium diol (Mw molecular weight: 368.00) having the structure of the following [Chemical Formula 1-1]) were charged into a reactor, and the inside of the reactor was replaced with N₂. Then, the DMAc solvent was charged into the reactor, and the reactor was heated to 90°C and the reaction was carried out for 90 minutes to prepare a polyurethane prepolymer.

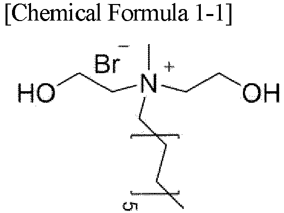

Then, the prepared polyurethane prepolymer solution was mixed with a DMAc solvent to prepare a prepolymer solution diluted to a concentration of about 25 wt.%. 0.9 g of ethylene diamine (Mw molecular weight: 60.10) was added within a temperature range of about 0 to 4 °C. Then, after adding ethylenediamine, the reaction was allowed to proceed for about 1.5 hours to prepare a polyurethane polymer.

### Example 2

A polyurethane was prepared in the same manner as in Example 1, except that 11.2 g of MDI (methylene diphenyl diisocyanate) (Mw molecular weight: 250.25), 53.3g of PTMG(poly(tetramethylene ether)glycol)(Mw molecular weight: 2000.0), 0.5 g of quaternary ammonium diol (Mw molecular weight: 368.00) having the structure of the [Chemical Formula 1-1], and 0.9 g of ethylene diamine (Mw molecular weight: 60.10) were charged into a reactor.

### Example 3

A polyurethane was prepared in the same manner as in Example 1, except that 10.9 g of MDI (methylene diphenyl diisocyanate) (Mw molecular weight: 250.25), 54.0g of PTMG(poly(tetramethylene ether)glycol)(Mw molecular weight 2000.0), 0.1 g of quaternary ammonium diol (Mw molecular weight: 368.00) having the structure of the [Chemical Formula 1-1], and 0.9 g of ethylene diamine (Mw molecular weight: 60.10) were charged into a reactor.

### Comparative Example 1

A polyurethane was prepared in the same manner as in Example 1, except that 10.8 g of MDI (methylene diphenyl diisocyanate) (Mw molecular weight: 250.25) , 54.2g of PTMG(poly(tetramethylene ether)glycol)(Mw molecular weight: 2000.0), and 0.9 g of ethylene diamine (Mw molecular weight: 60.10) were charged into a reactor.

### Comparative Example 2

A polyurethane was prepared using PTMG, MDI and [Chemical Formula 1-1] in the same content as used in Example 3. However, unlike Example 3 in which PTMG, MDI and [Chemical Formula 1-1] were reacted together, PTMG and MDI were first reacted (reacted until the reaction rate level of NCO of MDI reached about 99%), and the [Chemical Formula 1-1] was charged as a chain extender and reacted with residual -NCO groups.

The molar ratios between MDI, PTMG and [Chemical Formula 1-1] components among the components used to prepare each polymer of Examples and Comparative Examples are shown in Table 1 below.

**[Table 1]**

| | MDI | Polyol | | |
|---|---|---|---|---|
| | | Polyol | PTMG | Chemical Formula 1-1 |
| Example 1 | 1.60 | 1.00 | 0.90 | 0.10 |
| Example 2 | 1.60 | 1.00 | 0.95 | 0.05 |
| Example 3 | 1.60 | 1.00 | 0.99 | 0.01 |
| Comparative Example 1 | 1.49 | 1.00 | 1.00 | - |
| Comparative Example 2 | 1.60 | 1.00 | 0.99 | 0.01 |
| * Unit | | | | |
| (1) the molar ratio between MDI and polyol, which was calculated by dividing the number of moles of isocyanate compound by the total number of moles of polyol. | | | | |
| (2) the ratio of the number of moles occupied by PTMG or Chemical Formula 1-1 among polyols, which means mol% if expressed as a percentage ratio. | | | | |

### Evaluation

### (1) Content of unreacted [Chemical Formula 1-1]

The monomer of Chemical Formula 1-1 remaining in the polyurethane after polymerization was quantitatively measured by High Performance Liquid Chromatography (HPLC) analyzer. More specifically, first, the prepared resin pellets was placed in a certain amount of solvent (saline solution), stirred for 24 hours, and then the extract was filtered to extract unreacted components in the resin. The solution thus obtained was taken, then analyzed by HPLC, and compared with the HPLC analysis result of the copolymer monomer previously measured, so that the component of the compound of Chemical Formula 1 remaining in the resin was determined. Looking at the experimental results described later, the unreacted monomer of Chemical Formula 1-1 remaining in the polymerized polyurethane is considered to be the cause of deterioration of mechanical properties.

### (2) Evaluation of antibacterial properties

The antibacterial activity of each polymer of Examples 1-3 and Comparative Example 1-2 was evaluated. Specifically, a 20 wt.% polymerization solution prepared using DMF (dimethylformamide) as a solvent was solvent-casted to produce a film (5 cm x 5 cm), and the antibacterial properties were evaluated in accordance with the JIS Z2801 method.

### (3) Evaluation of durability (heat resistance)

The heat resistance of each polymer of Examples 1-2 and Comparative Examples was evaluated. Specifically, the weight loss of the polymers was compared while increasing the temperature to 700°C at a rate of 10°C/min under N₂. The results are as shown in Fig. 1a (Comparative Example 1), Fig. 1b (Example 1) and Fig. 1c (Example 2).

Fig. 1 confirms that even if the unit of the compound of Chemical Formula 1 (or Chemical Formula 1-1) is introduced during polymerization of polyurethane as in Examples, the heat resistance of polyurethane does not decrease.

### (4) Evaluation of tensile properties

The tensile properties of each polymer of Examples 1-3 and Comparative Example 1-2 were evaluated. Specifically, the tensile strength and tensile strain of the sample were measured according to the ASTM D882 tensile test method. For reference, ASTM D882 relates to tensile testing of thin (about 1 mm thick) films, and the standard for experimental samples according to the present invention is 5 mm x 50 mm (width x length) (thickness: about 200 to 300 µm).

For reference, the tensile strength refers to the maximum stress until the material breaks due to a tensile load, and is the maximum load divided by the cross-sectional area of the material. And, the tensile strain means the strain when the material is deformed by tensile stress and is expressed as a ratio to the amount of change in length from the initial length.

**[Table 2]**

| | Unreacted amount (ppm) of Chemical Formula 1-1 | Antibacterial activity (%) against *E.Coli* (ATCC 8739) | Tensile strength (MPa) | Tensile strain (%) |
|---|---|---|---|---|
| Example 1 | 648 | 100 | 34.8±1.26 | 976.6±24.83 |
| Example 2 | 330 | 100 | 61.2±1.28 | 934.2±24.8 |
| Example 3 | 272 | 100 | 54.8±5.02 | 986.6±30.93 |
| Comparative Example 1 | - | 0 | 29.9±1.32 | 1023.1±50.45 |
| Comparative Example 2 | 1,271 | 100 | 25.3±2.76 | 736.1±36.35 |

As shown in Table 1, Examples 1 to 3 have higher tensile strength than Comparative Examples 1 to 2. In the case of tensile strain, Examples 1 to 3, which further ensured antibacterial properties, show tensile strain similar to that of Comparative Example 1. That is, Examples 1 to 3 show excellent elasticity (even though Chemical Formula 1-1 was further reacted).

On the other hand, unlike the preparation process of the polyurethane polymer of the present application, it was confirmed that in the case of Comparative Example 2 in which the diol of Chemical Formula 1-1 was used as a chain extender, unreacted monomers were present excessively and the mechanical properties (tensile strength, tensile strain) were deteriorated.

## Claims

1. An elastic antibacterial polyurethane polymer comprising a unit derived from (A) an isocyanate compound; and (B) a polyol comprising a polyether glycol and a diol represented by the following Chemical Formula 1,
wherein the (B) polyol comprises 0.01 to 40 mol% of the diol represented by Chemical Formula 1: 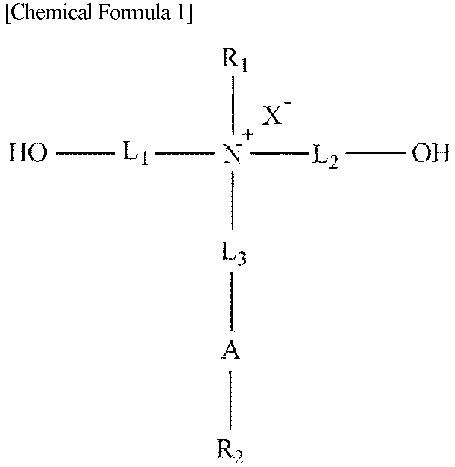 (wherein, in Chemical Formula 1,
R₁ and R₂ are each independently hydrogen, an alkyl group, a haloalkyl group, an alkenyl group, an alkynyl group, an aryl group, a heteroaryl group, an aryloxy group, an alkoxy group, an alicyclic structure, a heteroalicyclic structure or an alkylthio group or an arylthio group,
L₁ and L₂ are each independently an alkylene group, a heteroalkylene group, a cycloalkylene group, an arylene group, or a heteroarylene group,
L₃ is a direct bond, an alkylene group, a heteroalkylene group, a cycloalkylene group, an arylene group, or a heteroarylene group,
the A is an alkylene group having more than 6 carbon atoms, and
X⁻ means an anion.)

2. The elastic antibacterial polyurethane polymer according to claim 1 wherein:
it shows an antibacterial rate of 90% or more as measured according to JIS Z 2801.

3. The elastic antibacterial polyurethane polymer according to claim 1 wherein:
it has a tensile strain of 900% or more as measured according to the ASTM D882 tensile test method (wherein, the tensile strain is measured for an elastic antibacterial polyurethane polymer sample having a ratio of width to length (width: length) of 1:1 to 100).

4. The elastic antibacterial polyurethane polymer according to claim 1 wherein:
it has a tensile strength of 30 Mpa or more as measured according to the ASTM D882 tensile test method (wherein, the tensile strength is measured for an elastic antibacterial polyurethane polymer sample having a ratio of width to length (width: length) of 1:1 to 100).

5. The elastic antibacterial polyurethane polymer according to claim 1 wherein:
the content of unreacted diol represented by Chemical Formula 1 is 1,000 ppm or less with respect to the total polymer.

6. The elastic antibacterial polyurethane polymer according to claim 1 wherein:
a molar ratio of the (A) isocyanate compound to the (B) polyol is in the range of 1.0 to 2.0.

7. The elastic antibacterial polyurethane polymer according to claim 1 wherein:
the A is an alkylene group having more than 6 and not more than 20 carbon atoms.

8. The elastic antibacterial polyurethane polymer according to claim 1 wherein:
the A has a structure represented by the following Chemical Formula 2: 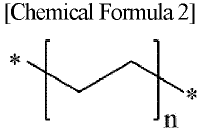 (wherein, in Chemical Formula 2,
n is a number of 4 or more, L₃ and R₂ may be respectively bonded to both ends indicated by the *. And provided that when L₃ is a direct bond, one end indicated by the * is bonded to an N atom.)

9. The elastic antibacterial polyurethane polymer according to claim 1 wherein:
the X⁻is F⁻, Cl⁻, Br⁻, I⁻, NO₃⁻, (CN)₂N⁻, BF₄⁻, ClO₄⁻, RSO₃⁻ (wherein, R is an alkyl group having 1-9 carbon atoms or a phenyl group), RCOO⁻ (wherein, R is an alkyl group or phenyl group having 1-9 carbon atoms), PF₆⁻, (CF₃)₂PF₄⁻, (CF₃)₃PF₃⁻, (CF₃)₄]PF₂⁻, (CF₃)₅PF⁻, (CF₃)₆P⁻, (CF₃SO₃⁻)₂, (CF₂CF₂SO₃⁻)₂, (C₂F₅SO₂)₂N⁻, (CF₃SO₃)₂N⁻, (CF₃SO₂)(CF₃CO)N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃COO⁻, C₃F₇COO⁻, CF₃SO₃⁻, or C₄F₉SO₃⁻.

10. The elastic antibacterial polyurethane polymer according to claim 1, further comprising a unit derived from (C) a diamine compound which is a chain extender.

11. A method for preparing an elastic antibacterial polyurethane polymer, comprising:
reacting (A) an isocyanate compound; and (B) a polyol comprising a polyether glycol and a diol represented by the following Chemical Formula 1.
wherein the (B) polyol comprises 0.01 to 40 mol% of the diol represented by Chemical Formula 1: 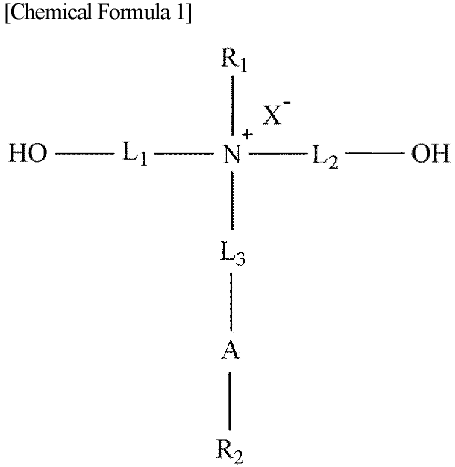 (wherein, in Chemical Formula 1,
R₁ and R₂ are each independently hydrogen, an alkyl group, a haloalkyl group, an alkenyl group, an alkynyl group, an aryl group, a heteroaryl group, an aryloxy group, an alkoxy group, an alicyclic structure, a heteroalicyclic structure or an alkylthio group or an arylthio group,
L₁ and L₂ are each independently an alkylene group, a heteroalkylene group, a cycloalkylene group, an arylene group, or a heteroarylene group,
L₃ is a direct bond, an alkylene group, a heteroalkylene group, a cycloalkylene group, an arylene group, or a heteroarylene group,
the A is an alkylene group having more than 6 carbon atoms, and
X⁻ means an anion.)

12. The method for preparing an elastic antibacterial polyurethane polymer according to claim 11 wherein:
the (B) polyol and the (A) isocyanate compound are mixed and reacted so that the molar ratio of the (A) isocyanate compound to the (B) polyol is in the range of 1.0 to 2.0.

13. The method for preparing an elastic antibacterial polyurethane polymer according to claim 11 wherein:
the reaction proceeds at a temperature of 100°C or less.

14. The method for preparing an elastic antibacterial polyurethane polymer according to claim 11 wherein:
the A is an alkylene group having more than 6 and not more than 20 carbon atoms.

15. The method for preparing an elastic antibacterial polyurethane polymer according to claim 11 wherein:
the A has a structure represented by the following Chemical Formula 2: 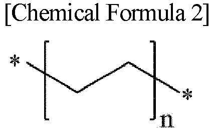 (wherein, in Chemical Formula 2,
n is a number of 4 or more, L₃ and R₂ may be respectively bonded to both ends indicated by the *. And, provided that when L₃ is a direct bond, one end indicated by the * is bonded to an N atom.)

16. The method for preparing an elastic antibacterial polyurethane polymer according to claim 11 wherein:
the X⁻is F, Cl⁻, Br⁻, I⁻, NO₃⁻, (CN)₂N⁻, BF₄⁻, ClO₄⁻, RSO₃⁻ (wherein, R is an alkyl group having 1-9 carbon atoms or a phenyl group), RCOO⁻ (wherein, R is an alkyl group or phenyl group having 1-9 carbon atoms), PF₆, (CF₃)₂]PF₄⁻, (CF₃)₃PF₃⁻, (CF₃)₄PF₂⁻, (CF₃)₅PF⁻, (CF₃)₆P⁻, (CF₃SO₃⁻)₂, (CF₂CF₂SO₃⁻)₂, (C₂F₅SO₂)₂N⁻, (CF₃SO₃)₂N⁻, (CF₃SO₂)(CF₃CO)N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃COO⁻, C₃F₇COO⁻, CF₃SO₃⁻, or C₄F₉SO₃⁻.

17. The method for preparing an elastic antibacterial polyurethane polymer according to claim 11, further comprising:
further reacting a prepolymer, which is obtained by reacting (A) an isocyanate compound; and (B) a polyol comprising a polyether glycol and a diol represented by the Chemical Formula 1, with (C) a diamine compound, which is a chain extender.

18. The method for preparing an elastic antibacterial polyurethane polymer according to claim 11, wherein:
the elastic antibacterial polyurethane polymer shows an antibacterial rate of 90% or more as measured according to JIS Z 2801.

19. The method for preparing an elastic antibacterial polyurethane polymer according to claim 11 wherein:
the elastic antibacterial polyurethane polymer has a tensile strain of 900% or more as measured according to the ASTM D882 tensile test method (wherein, the tensile strain is measured for an elastic antibacterial polyurethane polymer sample having a ratio of width to length (width: length) of 1:1 to 100).

20. The method for preparing an elastic antibacterial polyurethane polymer according to claim 11, wherein:
the elastic antibacterial polyurethane polymer has a tensile strength of 30 Mpa or more as measured according to the ASTM D882 tensile test method (wherein, the tensile strength is measured for an elastic antibacterial polyurethane polymer sample having a ratio of width to length (width: length) of 1:1 to 100).

21. The method for preparing an elastic antibacterial polyurethane polymer according to claim 11, wherein:
the elastic antibacterial polyurethane polymer has the content of unreacted diol represented by Chemical Formula 1 of 1,000 ppm or less with respect to the total polymer.

22. An article comprising the polyurethane polymer according to claim 1,
wherein the article is fibers, fabrics, garments, paints, automotive interior materials, automotive interior materials, mattresses or foams.
